(19) Europäisches Patentamt / European Patent Office / Office européen des brevets

(11) EP 1 448 708 B1

# (12) EUROPEAN PATENT SPECIFICATION

(45) Date of publication and mention of the grant of the patent:
**11.03.2009 Bulletin 2009/11**

(21) Application number: **02788984.9**

(22) Date of filing: **21.11.2002**

(51) Int Cl.:
***C08L 59/00*** *(2006.01)* ***C08L 75/04*** *(2006.01)*
***C08G 18/56*** *(2006.01)* ***C08K 5/05*** *(2006.01)*

(86) International application number:
**PCT/KR2002/002180**

(87) International publication number:
**WO 2003/050187 (19.06.2003 Gazette 2003/25)**

## (54) POLYOXYMETHYLENE COMPOSITE RESIN COMPOSITION AND ARTICLES PREPARED THEREFROM

POLYOXYMETHYLENVERBUNDHARZZUSAMMENSETZUNG UND DARAUS HERGESTELLTE GEGENSTÄNDE

COMPOSITION DE RESINE COMPOSITE A BASE DE POLYOXYMETHYLENE ET ARTICLES PREPARES A PARTIR DE CETTE COMPOSITION

(84) Designated Contracting States:
**AT BE BG CH CY CZ DE DK EE ES FI FR GB GR IE IT LI LU MC NL PT SE SK TR**

(30) Priority: **21.11.2001 KR 2001072705**

(43) Date of publication of application:
**25.08.2004 Bulletin 2004/35**

(73) Proprietors:
- **Korea Engineering Plastics Co., Ltd**
  **121-805 Seoul (KR)**
- **SK CHEMICALS CO., LTD.**
  **Suwon,**
  **Gyeonggi 440-301 (KR)**

(72) Inventors:
- **CHIN, Chong-Won**
  **431-080 Anyang, Gyeonggi (KR)**
- **KIM, Young-Heup,**
  **3-805 OLympus-Golden**
  **Ulsan-si, 680-832 (KR)**
- **BYUN, Kyung-Seob**
  **680-752 Ulsan (KR)**
- **LEE, Tae-Woong,**
  **303-204, Poongrim Sinan Apt.,**
  **441-390 Suwon,**
  **Gyeonggi (KR)**
- **KIM, Dong-Sik,**
  **SK Chemicals CO.,Ltd**
  **Kyungki-do 440-745 (KR)**
- **KWON, Oh-Eui,**
  **101-706, Samsung Mido Apt.,**
  **440-300 Suwon,**
  **Gyeonggi (KR)**
- **LEE, Hwa-Yong,**
  **315-1105, Yongnam Apt.,**
  **440-300 Suwon,**
  **Gyeonggi (KR)**
- **SHIN, Jung-Eun,**
  **230, Wooseong Highhill**
  **440-320 Suwon,**
  **Gyeonggi (KR)**

(74) Representative: **Larcher, Dominique**
**Cabinet Vidon,**
**16 B, rue Jouanet,**
**B.P. 90333,**
**Technopole Atalante**
**35703 Rennes Cédex 7 (FR)**

(56) References cited:
**EP-A- 0 430 215** **EP-A- 0 565 304**
**WO-A-00/29482** **WO-A-91/18051**
**JP-A- 7 138 449** **JP-A- 7 195 476**
**JP-A- 7 242 724** **KR-A- 2000 034 837**
**KR-A- 2001 032 662**

- **DATABASE WPI Section Ch, Week 199249 Derwent Publications Ltd., London, GB; Class A25, AN 1992-402285 XP002364578 & JP 04 298560 A (POLYPLASTICS KK) 22 October 1992 (1992-10-22)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 448 708 B1

- **DATABASE WPI Section Ch, Week 199537 Derwent Publications Ltd., London, GB; Class A25, AN 1995-281081 XP002364579 & JP 07 179723 A (POLYPLASTICS KK) 18 July 1995 (1995-07-18)**

## Description

TECHNICAL FIELD

The present invention relates to polyoxymethylene composite resin compositions and articles prepared therefrom. More specifically, the present invention is directed to a polyoxymethylene composite resin composition having increased compatibility of resins by use of a thermoplastic polyurethane resin containing a specific content of active isocyanate as an impact modifier, and an article formed from the polyoxymethylene composite resin composition.

PRIOR ART

Generally, a polyoxymethylene homopolymer or copolymer, which has excellent mechanical properties, creep resistance, fatigue resistance and wear resistance, has been widely used in the electric and electronic parts or in the application fields requiring a variety of properties including mechanical mechanisms. However, the polyoxymethylene resin is poor in impact resistance and thus is partially limited in its use. To improve the impact resistance of the polyoxymethylene resin, it is known that a thermoplastic polyurethane resin is used as an impact modifier.

For instance, U.S. Pat. No. 4,804,716 discloses a process of increasing impact strength of polyoxymethylene resin by adding a thermoplastic polyurethane resin having a glass transition temperature of lower than -15°C as an impact modifer, thereby the thermoplastic polyurethane resin is dispersed as particles of a size of 0.1-0.9 micron in the polyoxymethylene resin. According to the above patent, the impact resistance may be increased to a specific level or higher, but the function of the polyurethane resin for improvement of impact strength is not sufficient due to low compatibility between the polyoxymethylene resin and the polyurethane resin. Further, it is problematic that the strength and the elongation at the weld line are lowered upon injection molding. Even though the above patent discloses that the impact strength of the polyoxymethylene resin may be improved by use of the polyurethane resin as an impact modifier, there is not found any teaching for the improvement of the tensile strength and the elongation at the weld line.

In addition, U.S. Patent No. 4,929,712 discloses that polyisocyanate or dimer/trimer thereof is added to a composite resin composition composed of a polyoxymethylene resin and a thermoplastic polyurethane resin in order to increase compatibility between the polyoxymethylene resin and the thermoplastic polyurethane resin. As a result, the interfacial bonding strength therebetween is enhanced, thus increasing impact strength of the polyoxymethylene resin composition as well as the strength and the elongation at the weld line. However, attributable to low thermal stability of the polyisocyanate compound additionally used for increasing the physical properties at the weld line, carbides and yellowing are generated during processing, and thus an external appearance of the formed articles becomes poor. Also, by reaction of the unreacted polyisocyanate compound upon processing, the impact resistance and properties at the weld line are decreased, and the melt viscosity is drastically increased (MI is drastically decreased), therefore resulting in lowered formability.

Likewise, in U.S. Patent No. 5,852,135, there is disclosed a composite resin composition which is characterized in that when various thermoplastic resins and modified polyoxymethylene resin having a polymerizable functional group such as an epoxy group, a carboxyl group and an acid anhydride group are used, the compatibility between the two resins is increased and the strength and the elongation at the weld line are enhanced, and mechanical properties including the impact strength are also enhanced, thereby producing the composite resin composition effectively exhibiting the properties of both polyoxymethylene resin and various thermoplastic resins. But the above patent is disadvantageous in that the polyoxymethylene resin having a polymerizable functional group such as an epoxy group, a carboxyl group and an acid anhydride group should be separately polymerized. As such, the polymerization reactivity is decreased, therefore resulting in decreased yields. Further, while a reactive functional group is absent in a polyurethane elastomer used as an impact modifier, even though the modified polyoxymethylene resin is used, limitations are imposed on the compatibility between the two resins. Thus, the strength and the elongation at the weld line are limitedly increased.

DISCLOSURE OF THE INVENTION

Leading to the present invention, the intensive and thorough research into polyoxymethylene composite resin compositions, carried out by the present inventors aiming to solve the problems encountered in the prior arts, resulted in the finding that a thermoplastic polyurethane resin containing a specific content of active isocyanate can be added to a polyoxymethylene resin with addition of a maleic anhydride-containing compound, thereby producing a polyoxymethylene composite resin composition with increased compatibility between the polyoxymethylene resin and the polyurethane resin.

Therefore, it is an object of the present invention to provide a polyoxymethylene composite resin composition, which may suppress the generation of carbides upon preparation thereof, and may increase the compatibility between the used resins.

It is another object of the present invention to provide an article formed from the above polyoxymethylene composite resin composition, which exhibits the high impact strength, the excellent strength and the elongation at the weld line, and the high formability.

According to an embodiment of the present invention, there is provided a polyoxymethylene composite resin composition, which comprises, 40-99 parts by weight of a polyoxymethylene resin, and 1-60 parts by weight of a thermoplastic polyurethane resin, based on 100 parts of said composition, where said thermoplastic polyurethane resin contains 0.05-1 wt% of active isocyanate therein, with addition of 0.01-5 parts by weight of a maleic anhydride-containing compound based on 100 parts of said polyoxymethylene resin and said thermoplastic polyurethane resin.

According to another embodiment of the present invention, there is provided an article formed from the above polyoxymethylene composite resin composition.

BEST MODES FOR CARRYING OUT THE INVENTION

The present invention pertains to polyoxymethylene composite resin compositions, and particularly, to polyoxymethylene composite resin composition with high compatibility of resins due to introduction of a thermoplastic polyurethane resin containing a specific content of active isocyanate, and articles formed from such a polyoxymethylene composite resin composition.

A polyoxymethylene resin used in the present invention is a polyoxymethylene homopolymer having a repeat unit represented by the following Formula 1 or a random copolymer having a monomeric unit of the Formula 1 and a monomeric unit represented by the following Formula 2:

Formula 1 $-(-CH_2O-)-$

Formula 2 $-[-(CX_1X_2)_xO-]-$

Where $X_1$ and $X_2$, which are the same or different, each represents hydrogen, an alkyl group or an aryl group, and x is an integer of 2-6, provided that both $X_1$ and $X_2$ are not hydrogen. The polyoxymethylene resin has an average molecular weight of 10,000-200,000.

The oxymethylene homopolymer is produced by polymerization of formaldehyde or cyclic oligomer thereof, for example, trioxane, and the oxymethylene copolymer resulting from the polymerization of the monomeric group of the Formula 1 and the monomeric group of the Formula 2 is obtained by randomly copolymerizing formaldehyde or cyclic oligomer thereof with a cyclic ether compound represented by the following Formula 3 or a cyclic formal compound represented by the following Formula 4:

Formula 3

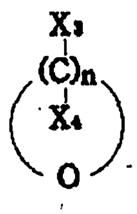

Formula 4

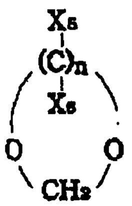

Where $X_3$, $X_4$, $X_5$ and $X_6$, which are the same or different, each represents hydrogen or an alkyl group and may be linked to the same carbon or different carbons, and each of n and m is an integer of 2-6.

As for a comonomer used in random copolymerization, the cyclic ether compound is exemplified by ethyleneoxide, propyleneoxide, butyleneoxide and phenyleneoxide, and the cyclic formal compound is exemplified by 1,3-dioxolane, diethyleneglycolformal, 1,3-propanediolformal, 1,4-butanediolformal, 1,3-dioxepanformal and 1,3,6-trioxocane. Preferably, at least one comonomer selected from the group consisting of ethyleneoxide, 1,3-dioxolane and 1,4-butanediol formal is used. The above comonomer is added to trioxane or formaldehyde as a main comonomer in the presence of a Lewis acid catalyst and randomly copolymerized, thereby producing an oxymethylene copolymer having a melting point of 150°C or higher with at least two adjacent carbon atoms in a main chain.

In the oxymethylene copolymer, a molar ratio of oxymethylene molecular structure relative to the repeated oxymethylene unit ranges from 0.05 to 50, preferably from 0.1 to 20.

The catalyst used in polymerization of the oxymethylene polymer, is exemplified by $BF_3{\cdot}OH_2$, $BF_3{\cdot}OEt_2$, $BF_3{\cdot}OBu_2$, $BF_3{\cdot}CH_3CO_2H$, $BF_3{\cdot}PF_5{\cdot}HF$, $BF_3$-10-hydroxyacetophenol, in which Et means an ethylene group, and Bu means a butyl group. Among them, $BF_3{\cdot}OEt_2$ or $BF_3.OBu_2$ is preferable. The catalyst is used in the mole range of from $2\times10^{-6}$ to $2\times10^{-2}$ on the basis of 1 mole of trioxane.

The polymerization may be carried out in a manner of bulk polymerization, suspension polymerization or solution polymerization, at 0-100°C, preferably 20-80°C.

As an inactivator for inactivating the catalyst remaining after the polymerization reaction, there are used tertiary amines, such as triethylamine; cyclic sulfur compounds, such as thiophene; phosphorus compounds, such triphenylphosphine; and alkyl-substituted melamine compounds, all of which are Lewis bases having unshared electron pairs. The inactivator functions to form a complex salt together with the catalyst.

Further, upon polymerization of polyoxymethylene, a chain transferring agent which is exemplified by alkyl-substituted phenols or ethers may be used. In particular, alkylether such as dimethoxymethane is preferable.

The most preferable compound among the polyoxymethylene resins is a polyoxymethylene homopolymer or copolymer having a melting point of 160°C or higher, the crystallinity of 65-85% and an average molecular weight of 10,000-200,000. As such, the homopolymer or the copolymer is used in the amount of 40-99 parts by weight, preferably 65-95 parts by weight, based on 100 parts of the whole composite resin composition.

On the other hand, the thermoplastic polyurethane resin useful in the present invention comprises hard and soft segments, in which the hard segment is derived from reaction of diisocyanate and diol of a chain extending agent, and the soft segment is derived from reacting polyol with diisocyanate. As such, characteristics of the soft segment are determined depending on species of the used polyols:

Examples of the diisocyanate include aromatic diisocyanates, aliphatic diisocyanates, alicyclic diisocyanates, and mixtures thereof. The aromatic diisocyanates are exemplified by 1,4-phenylenediisocyanate; 2,4-, 2,6-toluenediisocyanate, and mixtures thereof; 2,2-, 2,4'-, 4,4'-methylenediphenylenediisocyanate; and naphthalene diisocyanate. The aliphatic diisocyanate or the alicyclic diisocyanate comprises cyclohexanediisocyanate, hexamethylenediisocyanate, and isophoronediisocyanate.

Examples of the diol chain extender are ethyleneglycol, diethyleneglycol, propyleneglycol, dipropyleneglycol, 1,3-butanediol, 1,4-butanediol, 2-methylpentanediol, 1,5-pentanediol, 1,6-hexanediol, 1,4-cyclohexanediol, 1,3- or 1,4-cyclohexanedimethanol and neopentylglycol. The above diol may be used alone or in mixtures thereof.

The polyol is classified into polyester polyol and polyether polyol.

The polyester polyol may be produced by reaction of one or more dicarboxylic acids and one or more diols. The dicarboxylic acid is selected from the group consisting of adipic acid, sebacic acid, suberic acid, methyl adipic acid, glutaric acid and azelaic acid. The diol is selected from the group consisting of ethyleneglycol, 1,3-or 1,2-propyleneglycol, 1,4-butanediol, 2-methylpentanediol, 1,5-pentanediol and 1,6-hexanediol. In addition, cyclic carbonate such as ε-caprolactone may be used for preparation of polyester polyol. Suitable are poly(ethylene adipate), poly(1,4-butylene adipate)

and mixtures thereof as the polyester polyol. Alternatively, poly(ε-caprolactone) may be used.

The polyether polyol may be obtained from the additional polymerization of alkylene oxide. The alkylene oxide useful in the present invention is exemplified by ethyleneoxide, propyleneoxide, butyleneoxide and tetrahydrofuran. In particular, it is preferred that the polyether polyol is selected from among poly(propyleneoxide)glycol, poly(tetramethyleneether)glycol and mixtures thereof.

The polyol constituting the soft segment of the thermoplastic polyurethane has a number average molecular weight in the range of 500 to 5000, and preferably 1000 to 3000.

The catalyst used for the thermoplastic polyurethane resin is typically represented by tertiary amines and organic metal compounds. The tertiary amine is selected from the group consisting of triethylamine, dimethylcyclohexylamine, N-methylmorpholine, N,N'-dimethylpiperazine, 2-(dimethylaminoethoxy)ethanol and diazabicyclo(2,2,2)-octane, while the organic metal compound is selected from the group consisting of tin diacetate, tin dioctoate, tin dilaurate and dibutyl tin dilaurate. The mainly used catalyst is the organic metal compound alone or mixtures thereof.

An important property of the thermoplastic polyurethane resin is the glass transition temperature of the soft segment. It is known that the lower the glass transition temperature of the soft segment, the higher the effect of the polyurethane resin as an impact modifier. The thermoplastic polyurethane resin suitable as an impact modifier contains the soft segment with a glass transition temperature of -10°C or lower, preferably -20°C or lower, and more preferably -30°C or lower.

In general, the thermoplastic polyurethane resin is polymerized using a batch type reactor or a continuous reaction extruder. In case of the batch type method, reactants are introduced into a reactor, reacted therein to a certain extent, discharged therefrom and additionally thermally treated for the completion of the reaction. Meanwhile, in case of the continuous reaction method, the reaction proceeds in an extruder by feeding raw materials to the extruder via a weighing unit from a raw material-storing tank. Compared with the batch type polymerization method, the polymerization method using the continuous reaction extruder is advantageous in terms of the product quality due to uniform heat distribution. Thus, in recent years, the method using the continuous reaction extruder has been mainly employed.

When a thermoplastic polyurethane resin is used as an impact modifier for increasing impact resistance of a polyoxymethylene resin, there is the problem of not sufficiently exhibiting the functions of the thermoplastic polyurethane resin as an impact modifier due to low compatibility between the polyoxymethylene resin and the thermoplastic polyurethane resin. Further, when the polyurethane resin contents are on the specific level or higher, the impact resistance of the polyoxymethylene composition may be increased to a certain extent, but there is deterioration of the strength and the elongation at the weld line due to low compatibility between the two resins. In particular, exfoliation occurs between the polyoxymethylene resin and the thermoplastic polyurethane resin, causing disadvantages in terms of poor eternal appearance of the formed articles and lowered production efficiency due to the stained injection mold.

In order to increase compatibility between the polyoxymethylene resin and the thermoplastic polyurethane resin, use of polyisocyanate or dimer/trimer thereof or polyoxymethylene resin having a polymerizable functional group is known in the art. However, such known methods suffer from drawbacks of aging and low thermal stability of added materials, and complicated processes owing to separate preparation of the polyoxymethylene resin having the polymerizable functional group.

With the aim of solving the drawbacks, there is provided a polyoxymethylene/thermoplastic polyurethane block copolymer resulting from reaction of active isocyanate present in the thermoplastic polyurethane resin and alcoholic group of the polyoxymethylene resin in an in-situ manner upon melt-kneading. That is, by using the thermoplastic polyurethane resin containing 0.05-1 wt% of active isocyanate as an impact modifier, the impact strength of the polyoxymethylene resin composition as well as the strength and the elongation at the weld line can be more effectively increased.

Meanwhile, the content of the active isocyanate in the thermoplastic polyurethane resin may be affected by the following parameters, for instance, equivalence ratios of isocyanate relative to alcohol in the diol chain extender and the polyol used as a raw material of the thermoplastic polyurethane resin, introduced catalyst amounts, reaction temperature, retention time in the reactor, screw configurations of the continuous reaction extruder, temperatures and times required for drying the produced thermoplastic polyurethane resin.

In the thermoplastic polyurethane resin resulting from the reaction of the isocyanate and the alcohol in the polyol and the chain extending agent, the higher the equivalence ratio of isocyanate relative to alcohol, the more the content of active isocyanate in the prepared thermoplastic polyurethane resin. However, when such an equivalence ratio is too high or too low, a desired thermoplastic polyurethane resin having high molecular weight cannot be obtained, thus not sufficiently functioning as an impact modifier. Therefore, in order to obtain a thermoplastic polyurethane resin suitable for use as an impact modifier for increasing impact strength of the polyoxymethylene resin, the equivalence ratio of isocyanate to alcohol is in the range of 0.99 to 1.10, preferably 1.00 to 1.08, and more preferably 1.01 to 1.06.

As another parameter affecting the content of the active isocyanate in the thermoplastic polyurethane resin, there is the amount of the catalyst added upon preparation of the thermoplastic polyurethane resin. When the catalyst is added in too large amounts, the content of active isocyanate in the thermoplastic polyurethane resin is decreased

due to fast reaction rates. Whereas, if the catalyst is used in too small an amount, the reaction is not sufficiently progressed and a desired thermoplastic polyurethane resin having high molecular weight cannot be obtained. The amount of the used catalyst varies with production process conditions, such as catalyst species, contents of a thermoplastic polyurethane resin in the composition, reactor temperatures and retention time. In general, the catalyst is preferably used in the amount of 10-1000 ppm.

Also, the content of active isocyanate in the thermoplastic polyurethane resin may also vary under production process conditions of the thermoplastic polyurethane resin.

Further, attributed to the temperature of the reactor, the content of active isocyanate in the thermoplastic polyurethane resin is variable. Too high a temperature of the reactor enhances the degree of reaction completion, thus decreasing the content of active isocyanate in the thermoplastic polyurethane resin. Meanwhile, the reaction is not sufficiently conducted at too low a temperature, thus producing a polyurethane resin having low molecular weight. As for the preparation of the thermoplastic polyurethane resin used to increase impact strength of the polyoxymethylene resin with the aid of the continuous reaction extruder, the temperature of the extruder ranges preferably from 150 to 250°C, and more preferably 170 to 210°C.

Meanwhile, in case of preparing the thermoplastic polyurethane resin using a continuous reaction extruder, the screw configuration of the extruder may have an effect on the content of the active isocyanate. With a twin-screw extruder, particularly an extruder incorporating high proportions of high intensity mixing sections such as a kneading block and a reverse pitch block, the melt-kneading effect of the reactants becomes high and thus end products have uniform quality. However, the degree of reaction completion is raised due to high heat of friction, decreasing the content of active isocyanate in the resin. On the other hand, when the screw of the extruder incorporates low proportions of a kneading block and a reverse block, the melt-kneading effect of the reactants is lowered and quality of the product is also reduced. Accordingly, it is preferred that a kneading block and a reverse block in the screw configuration of the extruder, necessary for the preparation of the thermoplastic polyurethane resin functioning as an impact modifier, constitute 10-40% of the whole length of the extruder screw.

In addition, when the thermoplastic polyurethane resin is prepared using the continuous reaction extruder, the retention time of the reactant in the extruder acts as still another parameter affecting the content of active isocyanate. The retention time is determined by rotation speed (rpm) of the screw of the continuous reaction extruder and feed rate of the reactants. Long retention time of the reactants in the extruder leads to decreased content of active isocyanate due to high degree of reaction completion.

An additional factor controlling the content of active isocyanate in the thermoplastic polyurethane resin is drying conditions after the preparation of the resin. In the case of the thermoplastic polyurethane resin, it is known that water content greatly affects the properties of the resin. If the water content in the resin is high, the residual water reacts with the thermoplastic polyurethane resin upon preparation of the polyoxymethylene composite resin and functions to decompose the thermoplastic polyurethane resin, thus decreasing the molecular weight of the thermoplastic polyurethane resin. Thereby, the thermoplastic polyurethane resin cannot function as an impact modifier. Further, upon melt-kneading, the molded articles are decreased in quality due to foams generated by water in the composition, and also the content of the active isocyanate is lowered by water upon storage of the thermoplastic polyurethane resin. Hence, the thermoplastic polyurethane resin has a water content of 1000 ppm or less after being dried, preferably 800 ppm or less, and more preferably 500 ppm or less. Also, a dehumidifying dryer may be preferably used to effectively control the water content.

Upon drying the thermoplastic polyurethane resin, the content of active isocyanate in the thermoplastic polyurethane resin is affected by the drying temperature and time. If the drying temperature is too high or the drying time is too long, the content of active isocyanate is decreased. Thus, the thermoplastic polyurethane resin used as an impact modifier should be low in water content to effectively exhibit the properties of the thermoplastic polyurethane upon melt-kneading, and as well be controlled in the drying temperature and the drying time to have a proper content of isocyanate after being dried.

Suitable for use as an impact modifier to increase impact resistance of the polyoxymethylene resin, the thermoplastic polyurethane resin is dried at 40-100°C, preferably 50-90°C, and more preferably 60-80°C, for 2-10 hours, preferably 3-9 hours, and more preferably 4-8 hours. The thermoplastic polyurethane resin dried under the above drying conditions has low water content and a proper content of active isocyanate, thereby obtaining the polyoxymethylene resin composition with the increased impact resistance.

Of the above mentioned parameters affecting the content of active isocyanate in the thermoplastic polyurethane resin, the equivalence ratio of isocyanate relative to alcohol of the reactants and the drying conditions are most important.

The content of active isocyanate of the thermoplastic polyurethane resin suitable for use as an impact modifier ranges from 0.05 to 1 wt%, and preferably 0.1 to 0.9 wt%, and more preferably 0.2 to 0.8 wt%. If the content is less than 0.05 wt%, the polyoxymethylene/polyurethane block copolymer produced in an in-situ manner is decreased by a small quantity upon the melt-kneading of the polyurethane resin with the polyoxymethylene resin, thus lowering interfacial bonding strength between the two resins due to poor compatibility of the resins. As a result, the impact strength may be

increased to a specific level, while the strength and the elongation are decreased at the weld line. When the content of active isocyanate in the thermoplastic polyurethane resin is larger than 1 wt%, the degree of reaction completion is decreased upon polymerization of the thermoplastic polyurethane resin and thus the resin having high molecular weight cannot be obtained, which indicates the reduction of the effectiveness as an impact modifier.

As mentioned above, active isocyanate in the produced thermoplastic polyurethane resin reacts with alcohol in the polyoxymethylene resin upon melt-kneading to produce the polyoxymethylene/polyurethane block copolymer in an in-situ manner, thus increasing the compatibility between the thermoplastic polyurethane resin and the polyoxymethylene resin and also interfacial bonding strength therebetween. Accordingly, articles formed from the polyoxymethylene composite resin composition having high impact strength and increased strength and elongation at the weld line can be provided. As such, the thermoplastic polyurethane resin is used in the amount of 1-60 parts by weight, and preferably 5-35 parts by weight, based on 100 parts of the composite resin composition.

In the meantime, the maleic anhydride-containing compound useful in the present invention is exemplified by styrene-maleic anhydride copolymer, maleic acid-ethylene-maleic anhydride terpolymer and ethylene-propylene-butadiene terpolymer containing succinic anhydride. In the present invention, the composition having excellent physical properties may be obtained even though the maleic anhydride-containing compound is not used. However, when the above compound is further added to the polyoxymethylene resin and the thermoplastic polyurethane resin containing 0.05-1.0 wt% of active isocyanate, reactivity of alcohol of the polyoxymethylene resin and active isocyanate of the thermoplastic polyurethane resin is increased to further enhance compatibility between the polyoxymethylene resin and the thermoplastic polyurethane resin, thus increasing interfacial bonding strength therebetween. Thereby, the composite resin composition having enhanced impact strength as well as excellent strength and elongation at the weld line can be obtained. As such, the maleic anhydride-containing compound is added in the amount of 0.01-5 parts by weight, and preferably 0.1-2 parts by weight, based on 100 parts of the polyoxymethylene resin and the thermoplastic polyurethane resin. If the amount is smaller than 0.01 parts by weight, the weld properties are not improved. Meanwhile, if the amount is larger than 5 parts by weight, physical properties of the prepared articles are lowered and surfaces thereof become poor due to bleeding-out of the added materials.

The composite resin composition of the present invention may further contain at least one conventional additive selected from the group consisting of mold lubricants, antioxidants, removing agents of formaldehyde or formic acid, fillers, colorants, adjuvants, light stabilizers and pigments. The additive may be used within the range of not negatively affecting the physical properties of the inventive composition.

The mold lubricant usable in the present invention includes alkylene bis-stearamide, wax and polyether glycide. In particular, ethylene bis-stearamide is favorable. Also, the antioxidant includes sterically hindered bisphenol, and preferably, triethyleneglycol-bis-3-(3-tert-butyl-4-hydroxy-5-methylphenyl)propionate.

The melt-kneading condition of the polyoxymethylene resin and the thermoplastic polyurethane resin may affect the physical properties of the composite resin composition. In order to effectively exhibit the properties of the thermoplastic polyurethane resin as an impact modifier, it is very important that the thermoplastic polyurethane resin is effectively dispersed in the polyoxymethylene resin. Any intensive mixing device capable of developing high shear at temperatures above the melting points of the above resins can be used to disperse the polyurethane in the polyoxymethylene. For instance, there are mixers including banbury mixers, roll mills, continuous kneaders, single screw extruders and twin screw extruders. In consideration of melt-kneadability and producibility, the twin screw extruder is most preferable. In particular, when elements increasing the kneadability of the above extruder, for example, kneading blocks and reverse blocks, are used, excellent results can be expected.

In one embodiment of the present invention, the polyoxymethylene resin and the thermoplastic polyurethane resin were passed through the twin screw extruder, after which extrudates were cooled in the cooling bath and cut into pellets. Thusly prepared polyoxymethylene composition was injection molded using an injector, to produce an injection molded article.

Having generally described this invention, a further understanding can be obtained by reference to certain specific examples.

THERMOPLASTIC RESINS No 1-5

Into a continuous reaction extruder (Werner & Pfleiderer ZSK 58 twin screw extruder) equipped with a weighing unit and incorporating a kneading block corresponding to 30% of the whole screw length, poly(1,4-butylene adipate) having number average molecular weight 1850, 4,4'-methylene diphenyldiisocynante and 1,4-butanediol were added in the amounts shown in the following Table 1 and polymerized at 190-220 °C, to give a thermoplastic polyurethane resin. The screw was rotated at 250 rpm, and 150 ppm of dibutyl tin dilaurate was used as a catalyst. The thermoplastic polyurethane resin polymerized in the continuous reaction extruder was made to chips using a pelletizer, which was then dried at 70°C for 5 hours with the use of a dehumidifying dryer (Conaix SC60, Inlet air dew point =-50°C), to afford a final themoplastic polyurethane resin.

(1) By titrating the thermoplastic polyurethane resin, a content of active isocyanate was measured according to the following method (application of a method of measuring an isocyanate content in a urethane material according to ASTM D2572). The results are shown in Table 1, below.
About 25 g of a thermoplastic polyurethane resin was added to a mixture of 50 ml of 2N di-n-butyl amine solution (mixture of di-n-butylamine and N,N-dimethylformide) and 115 ml of N,N-dimethylformamide, and totally dissolved therein. Thereafter, 100 ml of isopropyl alcohol was added to the resultant mixture, to which an indicator (Bromocresol Blue) was added. Then, the reaction mixture was titrated with 1N hydrochloric acid to measure the content of active isocyanate in the thermoplastic polyurethane resin (active NCO%).

$$\text{Active NCO\%}=\frac{42.02\times N\times(B-S)}{1000\times W}\times 100$$

Where
N: normal concentration of hydrochloric acid,
B: amount (ml) of hydrochloric acid consumed for titration in the absence of the thermoplastic polyurethane resin,
S: amount (ml) of hydrochloric acid consumed for titration in the presence of the thermoplastic polyurethane resin,
W: weight (g) of the thermoplastic polyurethane resin.
(2) Melt index of the thermoplastic polyurethane resin was measured by use of an MI indexer (Davenport Co.). The results are given in Table 1, below.

The thermoplastic polyurethane resin was dried in a vacuum oven at 60°C for 4 hours, placed into the MI indexer, preheated at 210°C for 5 min, subjected to load of 5000g and measured for the amount of the resin flowing in 10 min as a weight unit.

TABLE 1

| Reactant (wt%) | No 0 | No 1 | No 2 | No 3 | No 4 | No 5 | No 5' |
|---|---|---|---|---|---|---|---|
| Equi.Ratio of NCO/OH | 0.95 | 0.99 | 1.02 | 1.04 | 1.06 | 1.08 | 1.12 |
| Poly(1,4-butyleneadipate) NW=1805 | 67.457 | 66.727 | 66.190 | 65.836 | 65.487 | 65.141 | 64.460 |
| 4,4'-methylene diphenyldiisocyanatc | 25.980 | 26.781 | 27.370 | 27.758 | 28.142 | 28.521 | 29.268 |
| 1,4-butanediol | 6.563 | 6.492 | 6.440 | 6.406 | 6.372 | 6.338 | 6.272 |
| Active NCO% (wt%) | 0.00 | 0.19 | 0.25 | 0.39. | 0.53 | 0.89 | 2.32 |
| MI (g/10min) | 67 | 24 | 12 | 34 | 45 | 87 | 163 |

THERMOPLASTIC RESINS 6-12

A thermoplastic polyurethane resin was prepared in the same manner as thermoplastic resin No.1, except that poly(1,4-butylene adipate) having number average molecular weight 1850, 4,4-methylenediphenylisocyanate and 1,4-butanediol were reacted at a weight ratio of 65.836:27.758:6.406. Thusly obtained resin was dried under drying conditions shown in the following Table 2, and was measured for water content, content of active isocyanate and melt index. The results are presented in Table 2, below.

TABLE 2

| | No 5" | No 6 | No 7 | No 8 | No 9 | No 10 | No 11 | No 12 | No 12' |
|---|---|---|---|---|---|---|---|---|---|
| Drying Temp. (°C) | 30 | 40 | 60 | 70 | 70 | 80 | 90 | 100 | 120 |
| Drying Time (hr) | 10 | 7 | 6 | 4 | 6 | 4 | 3 | 2 | 2 |
| Water (ppm) | 1500 | 850 | 550 | 520 | 450 | 460 | 380 | 420 | 350 |
| Active NCO% | 0.18 | 0.37 | 0.38 | 0.41 | 0.35 | 0.29 | 0.21 | 0.23 | 0.00 |

(continued)

| | No 5" | No 6 | No 7 | No 8 | No 9 | No 10 | No 11 | No 12 | No 12' |
|---|---|---|---|---|---|---|---|---|---|
| MI (g/10min) | 54 | 41 | 39 | 37 | 31 | 29 | 27 | 27 | 18 |
| *Physical properties of compositions obtained in the following examples and comparative examples were measured: | | | | | | | | | |

(1) Melt Index (MI); Formability (Flowability)

Based on ASTM D1238, the sample was extruded from an orifice having a predetermined inner diameter at 190°C under a load of 2.16 kg for 10 min and then weighed. High value means good formability (flowability), while low value means poor formability (flowability).

(2) Weld Properties (Tensile Strength and Tensile Elongation)

Based on ASTM D638, the tensile strength and the elongation were measured when the sample was broken in the weld part. High value means excellent weld properties, whereas low value means low properties.

(3) Izod Impact Strength

Based on ASTM D256, Izod notched impact strength was measured. High value means good Izod notched impact strength, while low value means bad strength.

(4) Carbide Generation

Carbides generated upon preparation of the composition were evaluated by the naked eye:

1 (No) 2 3 4 5 (Abundant)

<——————————>

(generated carbides)

EXAMPLE 1

80 parts by weight of a polyoxymethylene resin (trade name: KEPITAL F20-01. purchased from Korea Engineering Plastics Co., Ltd, MI=9.5g/10min, hereinafter referred to as "POM-1"), 20 parts by weight of the thermoplastic polyurethane resin No 2 (trade came: SKYTHANE S180A-28S, SK Chemicals, Co.), 0.2 parts by weight of triethyleneglycol-bis-3-(3-tert-butyl-4-hydroxy-5 methylphenyl)propionate, 0.2 parts by weight of ethylene bis-stearamide and 0.3 parts by weight of maleic acid-ethylene-maleic anhydride terpolymer (trade name: UMEX2000, Sanyo Kasei Co., Ltd. (Japan), hereinafter referred to as "MA-1") were mixed with the use of a super-mixer for 5 min, and melt-kneaded using a twin screw extruder. The extrudate was quenched in the cooling bath and made to pellets. Thusly obtained polyoxymethylene composition was formed into a test specimen using an injector, and the test specimen was measured for physical properties according to the above measurement methods. The results are shown in Table 3, below.

EXAMPLE 2

A test specimen of a polyoxymethylene composition was prepared in the same manner as in Example 1, except that 0.3 parts by weight of styrene-maleic anhydride copolymer (trade name: SMA3000P, Atochem. Co. (USA), hereinafter referred to as "MA-2") was further added instead of 0.3 parts by weight of maleic acid-ethylene-maleic anhydride terpolymer. Physical properties of the test specimen were measured according to the above methods. The results are shown in Table 3, below.

EXAMPLE 3-4

A test specimen of a polyoxymethylene composition was prepared in the same manner as in Example 1, except that the thermoplastic polyurethane resin No 3 was used, instead of the thermoplastic polyurethane resin No 2, and no maleic acid-ethylene maleic anhydride terpolymer was added MA-1 and MA-2, respectively, were further added. Physical properties of each test specimen were measured according to the above methods. The results are shown in Table 3, below.

EXAMPLES 5-6

Each test specimen of polyoxymethylene compositions was prepared in the same manner as in Example 1, except that the thermoplastic polyurethane resins No 8 and 9, respectively, were used instead of the thermoplastic polyurethane resin No 2. Physical properties of each test specimen were measured according to the above methods. The results are shown in Table 3, below.

EXAMPLES 7-9

Each test specimen of polyoxymethylene compositions was prepared in the same manner as in Example 1, except that the contents of POM-1 and the thermoplastic polyurethane resin No 2 were changed. Physical properties of each test specimen were measured according to the above methods. The results are shown in Table 3, below.

EXAMPLE 10

A test specimen of a polyoxymethylene composition was prepared in the same manner as in Example 1, except that 50 parts by weight of POM-1, 50 parts by weight of the thermoplastic polyurethane resin No 2 and 1.0 part by weight of MA-1 were used. Physical properties of the test specimen were measured according to the above methods. The results are shown in Table 3, bellow.

COMPARATIVE EXAMPLE 1

A test specimen of a polyoxymethylene composition was prepared in the same manner as in Example 1, except that no maleic acid-ethylene-maleic anhydride terpolymer was added and the thermoplastic polyurethane resin No 0 was used. Physical properties of the test specimen were measured according to the above methods. The results are shown in Table 4, below.

COMPARATIVE EXAMPLE 2

A test specimen of a polyoxymethylene composition was prepared in the same manner as in Example 1, except that the thermoplastic polyurethane resin was used. Physical properties of the test specimen were measured according to the above methods. The results are shown in Table 4, below.

COMPARATIVE EXAMPLE 3

A test specimen of a polyoxymethylene composition was prepared in the same manner as in Comparative Example 2, except that modified polyoxymethylene resin having a functional group of styrene-maleic anhydride (for testing in Korea Engineering Plastics Co. Ltd., MI=9.5g/10min, hereinafter referred to as "POM-2") was used instead of the polyoxymethylene resin used in Example 1. Physical properties of the test specimen were measured according to the above methods. The results are shown in Table 4, below.

COMPARATIVE EXAMPLE 4

A test specimen of a polyoxymethylene composition was prepared in the same manner as in Comparative Example 2, except that 0.5 parts by weight of isophorone diisocyanate trimer as a polyisocyanate compound (trade name: Desrnodur IDT, Bayer Co., hereinafter referred to "IDCy") was further added. Physical properties of the test specimen were measured according to the above methods. The results are shown in Table 4, below.

COMPARATIVE EXAMPLE 5

A test specimen of a polyoxymethylene composition was prepared in the same manner as in Comparative

Example 2, except that 2.0 parts by weight of isophorone diisocyanate trimer as a polyisocyanate compound was used. Physical properties of the test specimen were measured according to the above methods. The results are shown in Table 4, below.

COMPARATIVE EXAMPLE 6

A test specimen of a polyoxymethylene composition was prepared in the same manner as in Example 1, except that no maleic acid-ethylene-maleic anhydride terpolymer was added and the thermoplastic polyurethane resin No 5' was used. Physical properties of the test specimen were measured according to the above methods. The results are shown in Table 4, below.

COMPARATIVE EXAMPLE 7

A test specimen of a polyoxymethylene composition was prepared in the same manner as in Example 1, no maleic acid-ethylene-maleic anhydride terpolymer was added and except that the thermoplastic polyurethane resin No 5" was used. Physical properties of the test specimen were measured according to the above methods. The results are shown in Table 4, below.

COMPARATIVE EXAMPLE 8

A test specimen of a polyoxymethylene composition was prepared in the same manner as in Example 1, no maleic acid-ethylene-maleic anhydride terpolymer was added and except that the thermoplastic polyurethane resin No 12' was used. Physical properties of the test specimen were measured according to the above methods. The results are shown in Table 4, below.

TABLE 3

| Reactant (part by weight) | Example | | | | | | | | | |
|---|---|---|---|---|---|---|---|---|---|---|
| | 1 | 2 | 3 | 4 | 5 | 6 | 7 | 8 | 9 | 10 |
| POM-1 | 80 | 80 | 80 | 80 | 80 | 80 | 90 | 85 | 75 | 50 |
| Thermoplastic resin No 2 | 20 | 20 | - | - | - | - | - | - | - | - |
| Thermoplastic resin No 3 | - | - | 20 | 20 | - | - | - | - | - | - |
| Thermoplastic resin No 8 | - | - | - | - | 20 | - | - | - | - | - |
| Ex.9 | - | - | - | - | | 20 | - | - | - | - |
| MA-1 | 0.3 | - | 0.3 | - | 0.3 | 0.3 | 0.3 | 0.3 | 0.3 | 1.0 |
| MA-2 | - | 0.3 | - | 0.3 | - | - | - | - | - | - |
| IRG | 0.2 | 0.2 | 0.2 | 0.2 | 0.2 | 0.2 | 0.2 | 0.2 | 0.2 | 0.2 |
| EBS | 0.2 | 0.2 | 0.2 | 0.2 | 0.2 | 0.2 | 0.2 | 0.2 | 0.2 | 0.2 |
| MI(g/10 min) | 3.5 | 3.4 | 3.8 | 4.0 | 3.5 | 3.6 | 5.5 | 5.0 | 3.0 | 2.5 |
| Weld Tensile Strength ($kg/cm^2$) | 385 | 385 | 381 | 380 | 380 | 385 | 450 | 420 | 350 | 220 |
| Weld Tensile Elon. (%) | 85 | 75 | 80 | 80 | 70 | 75 | 20 | 25 | 100 | 150 |
| Izod Impact St.(kg·cm/cm) | 24 | 22 | 23 | 23 | 24 | 23 | 13 | 15 | 28 | 100< |

(continued)

| Reactant (part by weight) | Example | | | | | | | | | |
|---|---|---|---|---|---|---|---|---|---|---|
| | 1 | 2 | 3 | 4 | 5 | 6 | 7 | 8 | 9 | 10 |
| Carbide Generation | 1 | 1 | 1 | 1 | 1 | 1 | 1 | 1 | 1 | 1 |

POM-1: polyoxymethylene resin (trade name: KEPITAL F20-01, Korea Engineering Plastics Co. Ltd., MI=9.5g/10min)
MA-1: maleic acid-ethylene-maleic anhydride terpolymer (trade name: UMEX 2000, Sanyo Kasei Co., Ltd. (Japan))
MA-2:styrene-maleic anhydride copolymer (trade name: SMA3000P, Atochem. Co. (USA))
Thermoplastic resin No 2: thermoplastic polyurethane resin obtained in Example 2
Thermoplastic resin No 3: thermoplastic polyurethane resin obtained in Example 3
Thermoplastic resin No 8: thermoplastic polyurethane resin obtained in Example 8
Thermoplastic resin No 9: thermoplastic polyurethane resin obtained in Example 9
IRG: triethyleneglycol-bis-3-(3-tert-butyl-4-hydroxy-5-methylphenyl) propionate (trade name: IRGANOX 245 FF, Ciba-Geigy Co.)
EBS: ethylene bis-stearamide (trade name: LEBAX-140P, Lion Chemical Co. Inc.)

TABLE 4

| Reactant (part by weight) | Comparative Example | | | | | | | |
|---|---|---|---|---|---|---|---|---|
| | 1 | 2 | 3 | 4 | 5 | 6 | 7 | 8 |
| POM-1 | 80 | 80 | - | 80 | 80 | 80 | 80 | 80 |
| POM-2 | - | - | 80 | - | - | - | - | - |
| Thermoplastic resin No 0 | 20 | 20 | 20 | 20 | 20 | - | - | - |
| Thermoplastic resin No 5' | - | - | - | - | - | 20 | - | - |
| Thermoplastic resin No 5" | - | - | - | - | - | - | 20 | - |
| Thermoplastic resin No 12' | - | - | - | - | - | - | - | 20 |
| MA-1 | - | 0.3 | - | - | - | - | - | - |
| IDCy | - | - | - | 0.5 | 2.0 | - | - | - |
| IRG | 0.2 | 0.2 | 0.2 | 0.2 | 0.2 | 0.2 | 0.2 | 0.2 |
| EBS | 0.2 | 0.2 | 0.2 | 0.2 | 0.2 | 0.2 | 0.2 | 0.2 |
| MI(g/10 min) | 5.5 | 5.3 | 5.0 | 0.09 | 0.04 | 5.1 | 5.3 | 5.5 |
| Weld Tensile Strength($kg/cm^2$) | 350 | 352 | 360 | 363 | 365 | 335 | 350 | 340 |
| Weld Tensile Elon.(%) | 5 | 6 | 11 | 12 | 15 | 6 | 6 | 5 |
| Izod Impact St.(kg-cm/cm) | 16 | 15 | 18 | 15 | 17 | 15 | 15 | 14 |

(continued)

| Reactant (part by weight) | Comparative Example | | | | | | | |
|---|---|---|---|---|---|---|---|---|
| | 1 | 2 | 3 | 4 | 5 | 6 | 7 | 8 |
| Carbide Generation, | 1 | 1 | 1 | 5 | 5 | 1 | 1 | 1 |

POM-1: polyoxymethylene resin (trade name: KEPITAL F20-01, Korea Engineering Plastics Co. Ltd., MI=9.5g/10 min)
POM-2: styrene-maleic anhydride containing modified polyoxymethylene resin (for testing in Korea Engineering Plastics Co. Ltd., MI=9.5g/10 min)
Thermoplastic resin No 0 thermoplastic polyurethane resin obtained in Comparative Example 1
Thermoplastic resin No 5' thermoplastic polyurethane resin obtained in Comparative Example 2
Thermoplastic resin No 5" thermoplastic polyurethane resin obtained in Comparative Example 3
Thermoplastic resin No 12' thermoplastic polyurethane resin obtained in Comparative Example 4
MA-1: maleic acid-ethylene-maleic anhydride terpolymer (trade name: UMEX 2000, Sanyo Kasei Co., Ltd. (Japan))
IDCy: isophorone diisocyanate trimer (trade name: Desmodur IDT, Bayer Co.)
IRG: triethyleneglycol-bis-3-(3-tert-butyl-4-hydroxy-5-methylphenyl) propionate (trade name: IRGANOX 245 FF, Ciba-Geigy Co.)
EBS: ethylene bis-stearamide (trade name: LEBAX-140P, Lion Chemical Co. Inc.)

From the results of the above Tables 3 and 4, it can be seen that physical properties are remarkably decreased in Comparative Examples 1-2, and 6-7 falling outside of the ranges of the process conditions and the contents of each component used in the present invention, for instance, in the case of not using the thermoplastic polyurethane resin as an impact modifier or use of the thermoplastic polyurethane resin having active isocyanate beyond the content ranges of the present invention. Also, in contrast with the inventive compositions obtained by using active isocyanate-containing polyurethane resin and the maleic anhydride-containing compound, the composition obtained by use of maleic anhydride-containing modified polyoxymethylene resin of Comparative Example 3 is limited in weld properties. Further, as shown in Comparative Examples 4-5, the composition containing the polyisocyanate compound additionally added to the polyurethane resin suffers from generation of large amounts of carbides due to thermal instability of the polyisocyanate compound and poor formability. Furthermore, as shown in Comparative Example 8, the composition obtained by use of the thermoplastic polyurethane resin without active isocyanate is poor in weld properties.

INDUSTRIAL APPLICABILITY

As described above, the polyoxymethylene composite resin composition of the present invention, which is prepared by adding an active isocyanate-containing polyurethane resin to a polyoxymethylene resin with selective addition of a maleic anhydride-containing compound, is advantageous in terms of excellent compatibility between the two resins, generation of no carbides, increased impact strength, superior weld strength and weld elongation, and high formability and flowability. In addition, articles can be formed from such a polyoxymethylene composite resin composition.
The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A polyoxymethylene composite resin composition, which comprises, 40-99 parts by weight of a polyoxymethylene resin, and 1-60 parts by weight of a thermoplastic polyurethane resin based on 100 parts of said composition, where said thermoplastic polyurethane resin contains 0.05-1 wt% of active isocyanate therein, and further comprising 0.01-5 parts by weight of a maleic anhydride-containing compound, based on 100 parts of said polyoxymethylene resin and said thermoplastic polyurethane resin.

2. The composition as defined in claim 1, wherein the amount of the polyoxymethylene resin is in the range of 65-95 parts by weight.

3. The composition as defined in claim 1, wherein the polyoxymethylene resin has a melting point of 160°C or higher, crystallinity of 65-85% and an average molecular weight of 10,000-200, 000.

4. The composition as defined in claim 1, wherein the polyoxymethylene resin is a homopolymer or a copolymer.

5. The composition as defined in claim 1, wherein the amount of the thermoplastic polyurethane is in the range of 5-35 parts by weight.

6. The composition as defined in claim 1, wherein an equivalence ratio of the active isocyanate to alcohol of a polyol compound and a diol compound of a chain extending agent used for preparation of the thermoplastic polyurethane resin ranges from 0.99 to 1.10.

7. The composition as defined in claim 1, wherein the thermoplastic polyurethane resin contains a soft segment with a glass transition temperature of-10°C or lower.

8. The composition as defined in claim 1, wherein the thermoplastic polyurethane resin is dried at 40-100°C for 2-10 hours after polymerization thereof.

9. The composition as defined in claim 1, wherein the thermoplastic polyurethane resin has water content of 1000 ppm or less after being dried.

10. The composition as defined in claim 1, wherein the maleic anhydride- containing compound is used in the amount of 0.1-2 parts by weight, based on 100 parts of said polyoxymethylene resin and said thermoplastic polyurethane resin.

11. The composition as defined in claim 1, wherein the maleic anhydride- containing compound is selected from the group consisting of maleic acid-ethylene- maleic' anhydride terpolymer, styrene-maleic anhydride copolymer, and ethylene- propylene-butadiene terpolymer containing succinic anhydride.

12. The composition as defined in claim 1, further comprising at least one additive selected from the group consisting of lubricants, antioxidants, and stabilizers.

13. An article formed from the polyoxymethylene composite resin composition of any one of claims 1 to 12.

**Patentansprüche**

1. Polyoxymethylen-Verbundharz-Zusammensetzung, umfassend 40-99 Gewichtsteile eines Polyoxymethylenharzes, und 1-60 Gewichtsteile eines thermoplastischen Polyurethanharz, bezogen auf 100 Teile der Zusammensetzung, wobei das thermoplastische Polyurethanharz 0,05-1 Gew-% an aktivem Isocyanat enthält, und außerdem umfassend 0,01-5 Gewichtsteile einer Maleinanhydrid enthaltenden Verbindung, bezogen auf 100 Teile des Polyoxymethylenharzes und des thermoplastischen Polyurethanharzes.

2. Zusammensetzung nach Anspruch 1, wobei der Gehalt an Polyoxymethylenharz im Bereich von 65-95 Gewichtsteilen liegt.

3. Zusammensetzung nach Anspruch 1, wobei das Polyoxymethylenharz einen Schmelzpunkt von 160°C oder höher hat, eine Kristallinität von 65-85% und ein durchschnittliches Molekulargewicht von 10000-200000.

4. Zusammensetzung nach Anspruch 1, wobei das Polyoxymethylenharz ein Homopolymer oder ein Copolymer ist.

5. Zusammensetzung nach Anspruch 1, wobei der Gehalt an thermoplastischem Polyurethan im Bereich von 5-35 Gewichtsteilen liegt.

6. Zusammensetzung nach Anspruch 1, wobei das Equivalentverhältnis von aktivem Isocyanat zum Alkohol einer

Polyolverbindung und einer Diolverbindung eines Kettenverlängerungsmittels, das zur Herstellung des thermoplastischen Polyurethanharzes benutzt wurde, sich von 0,99 bis 1,10 erstreckt.

7. Zusammensetzung nach Anspruch 1, wobei das thermoplastische Polyurethanharz ein weiches Segment mit einer Glasübergangstemperatur von -10°C oder darunter enthält.

8. Zusammensetzung nach Anspruch 1, wobei das thermoplastische Polyurethanharz nach seiner Polymerisation für 2-10 Stunden bei 40-100°C getrocknet worden ist.

9. Zusammensetzung nach Anspruch 1, wobei das thermoplastische Polyurethanharz einen Wassergehalt von 1000 ppm oder weniger hat, nachdem es getrocknet ist.

10. Zusammensetzung nach Anspruch 1, wobei die Maleinanhydrid enthaltende Verbindung in einer Menge von 0,1-2 Gewichtsteilen eingesetzt wird, bezogen auf 100 Teile des Polyoxymethylenharzes und des thermoplastischen Polyurethanharzes.

11. Zusammensetzung nach Anspruch 1, wobei die Maleinanhydrid enthaltende Verbindung ausgewählt ist aus der Gruppe bestehend aus Maleinsäure-Ethylen-Maleinanhydrid-Terpolymer, Styren-Maleinsäure-Copolymer, und Bernsteinsäureanhydrid enthaltendem Ethylen-Propylen-Butadien-Terpolymer.

12. Zusammensetzung nach Anspruch 1, weiterhin umfassend mindestens ein Additiv ausgewählt aus der Gruppe bestehend aus Schmiermitteln, Antioxidantien und Stabilisierern.

13. Artikel hergestellt aus der Polyoxymethylen-Verbundharz-Zusammensetzung nach einem der Ansprüche 1 bis 12.

**Revendications**

1. Composition de résine composite à base de polyoxyméthylène, qui comprend 40 à 99 parties en poids d'une résine polyoxyméthylène et 1 à 60 parties en poids d'une résine polyuréthane thermoplastique sur la base de 100 parties de ladite composition, ladite résine polyuréthane thermoplastique contenant 0,05 à 1 % en poids d'isocyanate actif dans celle-ci et comprenant en outre 0,01 à 5 parties en poids d'un composé contenant un anhydride maléique sur la base de 100 parties de ladite résine polyoxyméthylène et de ladite résine polyuréthane thermoplastique.

2. Composition telle que définie à la revendication 1, dans laquelle la quantité de résine polyoxyméthylène est de l'ordre de 65 à 95 parties en poids.

3. Composition telle que définie à la revendication 1, dans laquelle la résine polyoxyméthylène a un point de fusion de 160 °C ou supérieur, une cristallinité de 65 à 85 % et un poids moléculaire moyen de 10 000 à 200 000.

4. Composition telle que définie à la revendication 1, dans laquelle la résine polyoxyméthylène est un homopolymère ou un copolymère.

5. Composition telle que définie à la revendication 1, dans laquelle la quantité de polyuréthane thermoplastique est de l'ordre de 5 à 35 parties en poids.

6. Composition telle que définie à la revendication 1, dans laquelle un rapport d'équivalence de l'isocyanate actif à l'alcool d'un composé polyol et d'un composé diol d'un agent d'extension de chaîne utilisé pour la préparation de la résine polyuréthane thermoplastique est de 0,99 à 1,10.

7. Composition telle que définie à la revendication 1, dans laquelle la résine polyuréthane thermoplastique contient un segment souple présentant une température de transition vitreuse de -10 °C ou inférieure.

8. Composition telle que définie à la revendication 1, dans laquelle la résine polyuréthane thermoplastique est séchée de 40 à 100 °C pendant 2 à 10 heures après sa polymérisation.

9. Composition telle que définie à la revendication 1, dans laquelle la résine polyuréthane thermoplastique a une teneur en eau de 1 000 ppm ou inférieure après avoir été séchée.

**10.** Composition telle que définie à la revendication 1, dans laquelle le composé contenant de l'anhydride maléique est utilisé en la quantité de 0,1 à 2 parties en poids sur la base de 100 parties de ladite résine polyoxyméthylène et ladite résine polyuréthane thermoplastique.

**11.** Composition telle que définie à la revendication 1, dans laquelle le composé contenant de l'anhydride maléique est choisi dans le groupe comprenant un terpolymère d'acide maléique - éthylène - anhydride maléique, un copolymère de styrène - anhydride maléique et un terpolymère d'éthylène - propylène - butadiène contenant de l'anhydride succinique.

**12.** Composition telle que définie à la revendication 1, comprenant en outre au moins un additif choisi dans le groupe comprenant les lubrifiants, les anti-oxydants et les stabilisants.

**13.** Article formé à partir de la composition de résine composite à base de polyoxyméthylène selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4804716 A
- US 4929712 A
- US 5852135 A